Europäisches Patentamt

European Patent Office

Office européen des brevets

(19)

(11) Veröffentlichungsnummer: **0 087 757**
**B1**

(12) **EUROPÄISCHE PATENTSCHRIFT**

(45) Veröffentlichungstag der Patentschrift:
**14.05.86**

(51) Int. Cl.⁴: **H 01 B 13/22**, G 02 B 6/44

(21) Anmeldenummer: **83101785.0**

(22) Anmeldetag: **23.02.83**

(54) **Einrichtung zur Herstellung eines elektrischen und/oder optischen Kabels.**

(30) Priorität: **26.02.82 DE 3207083**

(43) Veröffentlichungstag der Anmeldung:
**07.09.83 Patentblatt 83/36**

(45) Bekanntmachung des Hinweises auf die Patenterteilung:
**14.05.86 Patentblatt 86/20**

(84) Benannte Vertragsstaaten:
**AT BE CH DE FR GB IT LI NL SE**

(56) Entgegenhaltungen:
**EP - A - 0 033 123**
**EP - A - 0 034 286**
**DE - B - 2 523 843**

(73) Patentinhaber: **Siemens Aktiengesellschaft, Berlin und München Wittelsbacherplatz 2, D-8000 München 2 (DE)**

(72) Erfinder: **Einsle, Günter, Einhornallee 60, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).·

ACTORUM AG

## Beschreibung

Die Erfindung betrifft eine Einrichtung zur Herstellung eines elektrischen und/oder optischen Kabels mit mindestens einer Ader und einem mittels eines Extruders aufgebrachten Mantel, dessen Inneres in einer davorliegenden Füllvorrichtung mit einer die Längsdichtigkeit ergebenden Füllmasse versehen ist.

Eine Einrichtung dieser Art ist aus der DE-B-2523843 bekannt. Die Füllvorrichtung und der nachfolgende Extruder sind dabei als selbständige Baueinheiten ausgebildet und die mit der Füllmasse versehene Kabelseele verläuft vom Ende der Fülleinrichtung frei und ohne Führung bis zum nachfolgenden Extruder. Dies kann insbesondere bei sehr empfindlichen Adern enthaltenden Seelen zu Problemen führen, weil die Gefahr besteht, dass unerwünscht grosse Beanspruchungen der Adern im Bereich des Extruders auftreten. Ein weiterer Nachteil dieser Anordnung ist darin zu sehen, dass die Füllung der Kabelseele bereits relativ früh erfolgt und durch zusätzliche Massnahmen sichergestellt werden muss, dass die Füllmasse nicht abläuft oder abgestreift wird.

Der vorliegenden Erfindung liegt die Aufgabe zugrunde, eine Einrichtung der eingangs genannten Art so weiterzubilden, dass sich ein gedrängter Aufbau ergibt und gleichzeitig die Beanspruchung der Ader auf ein Minimum reduziert werden kann. Gemäss der Erfindung wird dies dadurch erreicht, dass die Ader im Inneren eines Führungsrohres verläuft, das an der Füllvorrichtung vor dem Zutritt der Füllmasse beginnt und nach dem Extruder endet, und dass ein weiteres, das Führungsrohr umschliessendes und als Füllrohr für die Füllmasse dienendes Rohr vorgesehen ist, das im die Füllmasse enthaltenden Teil der Füllvorrichtung beginnt und sich mindestens bis zum Extruder erstreckt.

Da die Adern in dem Führungsrohr durch den Extruder hindurchgeleitet werden, können sie weder den Spritzkopf berühren und dabei ankleben, noch kann es vorkommen, dass beim Austreten aus dem Extruder sich an der Ader ein Knoten bildet, welcher zum Abriss führt. Ein weiterer besonderer Vorteil der erfindungsgemässen Einrichtung besteht darin, dass die Adern weitgehend zentrisch im Inneren des Mantels verlaufen, weil das Führungsrohr innerhalb des Füllrohres für die Füllmasse verläuft. Deshalb ist es besonders zweckmässig, wenn beide Rohre konzentrisch zueinander verlaufen und auch konzentrisch bezüglich des Reckkegels des Extruders angeordnet sind.

Weiterbildungen der Erfindung sind in den Unteransprüchen wiedergegeben.

Die Erfindung wird nachfolgend anhand eines Ausführungsbeispiels näher erläutert. Es zeigen:

Fig. 1 einen Längsschnitt durch eine Einrichtung nach der Erfindung und

Fig. 2 einen Schnitt quer zur Längsachse der Anordnung nach Fig. 1 im Bereich des Reckkegels.

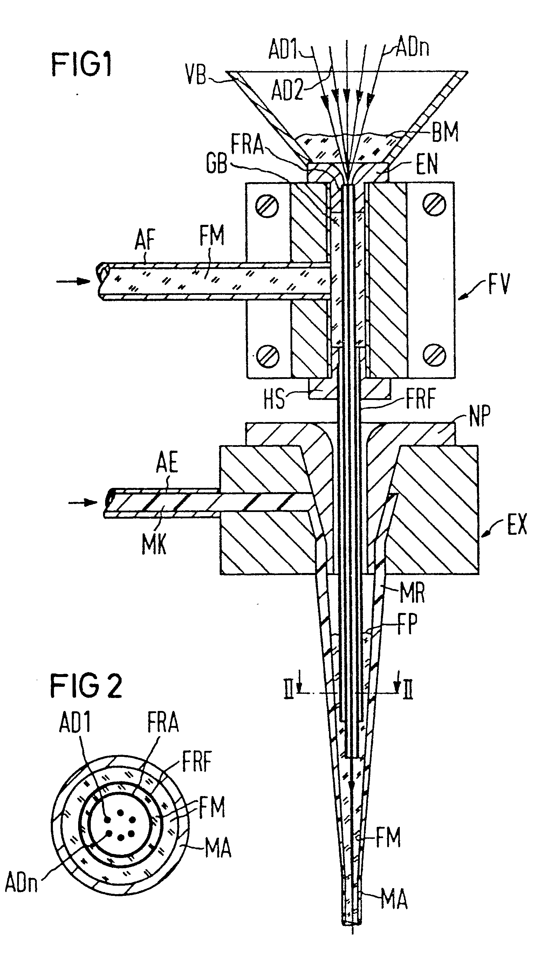

In Fig. 1 sind eine Reihe von Adern AD1 bis ADn dargestellt, die einem Einführnippel EN zugeführt werden. Die Ablaufeinrichtungen und ggf. Verseileinrichtungen sind nicht näher gezeichnet; sie können den üblichen Aufbau aufweisen. Es ist auch nicht unbedingt notwendig, dass eine Verseilung der einzelnen Adern durchgeführt wird.

Es genügt ggf. auch, dass nur eine einzige Ader vorhanden ist. Besonders vorteilhaft ist die Erfindung in solchen Fällen anwendbar, in denen empfindliche Adern AD1 bis ADn zu verarbeiten sind. Letzteres gilt insbesondere dann, wenn faserförmige Lichtwellenleiter zu einem optischen Kabel verarbeitet werden sollen. In manchen Fällen ist es vorteilhaft, vorab eine Benetzung der Adern durchzuführen. Hierzu ist am Einlaufnippel EN ein Vorratsbehälter VB vorgesehen, in dem eine der Benetzung dienende Masse BM vorgesehen ist. Diese Benetzung findet nicht unter Druck sondern drucklos statt und stellt sicher, dass die später unter Druck zuzuführende Füllmasse FM besser anliegt und blasenfrei dichtet. Der Einführnippel EN ist mit einem Aussengewinde versehen, das in eine Gewindebohrung GB eingeschraubt ist, welche Bestandteil einer Füllvorrichtung FV ist. Dieser Füllvorrichtung wird über einen Anschlussstutzen AF die Füllmasse FM unter entsprechendem Druck zugeführt. Am ausgangsseitigen Ende der Gewindebohrung GB ist eine Halteschraube HS eingedreht, die mit ihrem flanschartigen Ansatz ein Füllrohr FRF aufnimmt und festhält. Dieses Füllrohr FRF ist stirnseitig zu dem mit Füllmasse erfüllten Innenraum der Gewindebohrung GB geöffnet, so dass die entsprechend niederviskose Füllmasse FM in das Innere des Füllrohres FRF eingepresst wird. Gleichzeitig ist ein Führungsrohr FRA vorgesehen, das konzentrisch zum Füllrohr FRF in dessen Innenraum verläuft und bereits beim Einführnippel EN beginnt. Dieses Führungsrohr FRA für die einzelnen Adern AD1 bis ADn ist stirnseitig gegenüber der Füllmasse FM abgedichtet, und zwar dadurch, dass es in das Innere des Einführnippels EN eingebracht ist. Dadurch kann keine Füllmasse in das Führungsrohr FRA gelangen und die einzelnen Adern AD1 bis ADn können leicht und weitgehend reibungsfrei an der Innenwandung entlang gleiten.

Der Füllvorrichtung FV ist ein Extruder EX nachgeordnet, der mit einem Anschlussstutzen AE versehen ist, über den die zur Bildung des Mantels MA des Kabels dienende Kunststoffmasse MK unter entsprechendem Druck und bei entsprechender Temperatur zugeführt wird. Zusammen mit einem im Zentrum des Extruders EX angeordneten, mit einer durchgehenden Bohrung versehenen Nippel NP wird ein Reckkegel MR erzeugt, der durch eine hier nicht dargestellte Abzugseinrichtung vom Extruder EX wegbewegt und dabei im Durchmesser verringert wird. Das Füllrohr FRF und das Führungsrohr FRA verlaufen durch die Bohrung im Extruder EX hindurch und ragen bis in den Reckkegel MR des extrudierten Mantelmaterials hinein. An der Stirnseite des Füllrohres FRF tritt die Füllmasse FM aus und bildet einen Füllspiegel FP, dessen Endfläche in Verarbeitungsrichtung gesehen, vor der endseitigen Stirnfläche des Füllrohres FRF liegt. Dadurch ist sichergestellt, dass das Füllmaterial FM stets in ausreichender Menge vorhanden ist und die Füllung der Kabelseele ohne Lufteinschlüsse vonstatten gehen kann. Durch die Vorbenetzung mit der Masse BM wird dieser Vorgang erleichtert. In diesem Zusammenhang ist es zweckmässig, dass der Durchmesser des Reckkegels MR im Bereich der Austrittstelle der Füllmasse aus dem Füllrohr FRF grösser ist als der Aussendurchmesser des stirnseitigen Endes dieses Füllrohres. Dadurch ist sichergestellt, dass die Füllmasse nach oben bis zu dem vergrösserten Füllspiegel FP gelangen kann. Ausserdem ergibt sich der Vorteil, dass der Abzug des Reckkegels nicht durch das stirnseitige Ende des Füllrohres FRF beeinträchtigt bzw. gebremst und ggf. deformiert wird. Das Führungsrohr FRA für die Adern AD1 bis ADn ist vorteilhaft so ausgelegt, dass es erst nach dem Füllrohr FRF endet. Dadurch wird die Führung der Adern über einen noch längeren Weg hin gewährleistet und ausserdem sind weniger Schwierigkeiten infolge des Fliessens der Füllmasse zu befürchten, weil diese zunächst noch an der Austrittstelle beim Füllrohr FRF an der Oberfläche des Führungsrohres FRA entlanggleiten kann.

Der Aufbau und die Zuordnung der einzelnen Elemente ist für den Bereich der senkrecht zur Verarbeitungsrichtung verlaufenden Schnittebene II–II nach Fig. 1 in Fig. 2 in vergrösserter Form dargestellt.

Das Füllrohr FRF ist zweckmässig baulich mit der Halteschraube HS verbunden (z. B. durch Verlöten) und kann somit in einfacher Weise zusammen mit dieser ausgewechselt werden. Auf diese Weise können durch Einsetzen von Rohren mit unterschiedlichen Durchmessern entsprechend unterschiedliche Kabeltypen gefertigt werden. In analoger Weise ist das Führungsrohr FRA mit dem Einführnippel EN baulich zu einer Einheit verbunden, so dass durch Auswechseln des Einführnippels EN zusammen mit dem Führungsrohr FRA eine Anpassung an unterschiedliche Aderzahlen in einfacher Weise möglich ist.

**Patentansprüche**

1. Einrichtung zur Herstellung eines elektrischen und/oder optischen Kabels mit mindestens einer Ader (AD1 bis ADn) und einem mittels eines Extruders (EX) aufgebrachten Mantel (MA), dessen Inneres in einer davorliegenden Füllvorrichtung (FV) mit einer Längsdichtigkeit ergebenden Füllmasse (FM) versehen ist, dadurch gekennzeichnet, dass die Ader (AD1 bis ADn) im Inneren eines Führungsrohres (FRA) verläuft, das an der Füllvorrichtung (FV) vor dem Zutritt der Füllmasse (FM) beginnt und nach dem Extruder (EX) endet, und dass ein weiteres, das Führungsrohr (FRA) umschliessendes und als Füllrohr (FRF) für die Füllmasse (FM) dienendes Rohr vorgesehen ist, das im die Füllmasse (FM) enthaltenden Teil der Füllvorrichtung (FV) beginnt und sich mindestens bis zum Extruder (EX) erstreckt.

2. Einrichtung nach Anspruch 1, dadurch gekennzeichnet, dass das Führungsrohr (FRA) und das Füllrohr (FRF) konzentrisch zueinander angeordnet sind.

3. Einrichtung nach einem der vorhergehenden Ansprüche, dadurch gekennzeichnet, dass das Füllrohr (FRF) in Durchlaufrichtung gesehen vor dem Führungsrohr (FRA) endet.

4. Einrichtung nach einem der vorhergehenden Ansprüche, dadurch gekennzeichnet, dass das Führungsrohr (FRA) und das Füllrohr (FRF) im Bereich des Reckkegels des Mantels (MA) enden.

5. Einrichtung nach einem der vorhergehenden Ansprüche, dadurch gekennzeichnet, dass das Füllrohr (FRF) am Ausgang der Fülleinrichtung (FE) angebracht ist.

6. Einrichtung nach Anspruch 5, dadurch gekennzeichnet, dass das Füllrohr (FRF) über eine Schraubverbindung auswechselbar am Ausgang der Füllvorrichtung (FV) gehalten ist.

7. Einrichtung nach einem der vorhergehenden Ansprüche, dadurch gekennzeichnet, dass das Führungsrohr (FRA) an einem am Eingang der Fülleinrichtung angeordneten Einführnippel (EN) angebracht ist.

8. Einrichtung nach einem der vorhergehenden Ansprüche, dadurch gekennzeichnet, dass vor dem Führungsrohr (FRA) ein Vorratsbehälter (VB) für eine der Benetzung der Ader (AD1 bis ADn) dienende Masse (BM) vorgesehen ist.

**Claims**

1. A device for producing an electric and/or optical cable having at least one wire (AD1 to ADn) and a sheath (MA) which is applied by means of an extruder (EX) and the interior of which is provided, in a preceding filling device (FV), with a filling compound which produces longitudinal sealing, characterised in that the wire (AD1 to ADn) runs inside a guide tube (FRA) which starts at the filling device (FV) prior to the introduction of the filling compound (FM) and terminates after the extruder (EX); and that a further tube is provided which surrounds the guide tube (FRA), serves as filling tube (FRF) for the filling compound (FM), and starts in that part of the filling device (FV) which contains the filling compound (FM) and extends at least to the extruder (EX).

2. A device as claimed in Claim 1, characterised in that the guide tube (FRA) and the filling tube (FRF) are arranged concentrically to one another.

3. A device as claimed in one of the preceding Claims, characterised in that, considered in the direction of flow, the filling tube (FRF) terminates before the guide tube (FRA).

4. A device as claimed in one of the preceding Claims, characterised in that the guide tube (FRA) and the filling tube (FRF) terminate in the region of the drawing cone of the sheath (MA).

5. A device as claimed in one of the preceding Claims, characterised in that the filling tube (FRF) is arranged at the outlet of the filling device (FE).

6. A device as claimed in Claim 5, characterised in that the filling tube (FRF) is interchangeably attached by means of a screw connection to the outlet of the filling device (FV).

7. A device as claimed in one of the preceding Claims, characterised in that the guide tube (FRA) is attached to an inlet nipple (EN) arranged at the inlet of the filling device.

8. A device as claimed in one of the preceding Claims, characterised in that the guide tube (FRA) is preceded by a feed container (VB) for a compound (BM) which serves to wet the wires (AD1 to ADn).

## Revendications

1. Dispositif pour fabriquer un câble électrique et/ou optique comportant au moins un conducteur (AD1 à ADn) et une gaine (MA) mise en place au moyen d'une extrudeuse (EX), dont l'intérieur comporte, dans un dispositif de remplissage (FV) monté en amont, une masse de remplissage (FM) réalisant une étanchéité longitudinale, caractérisé par le fait que le conducteur (AD1 à ADn) passe à l'intérieur d'un tube de guidage (FRA), qui commence au niveau du dispositif de remplissage (FV) en amont de l'entrée de la masse de remplissage (FM) et se termine en aval de l'extrudeuse (EX), et qu'il est prévu un autre tube entourant le tube de guidage (FRA) et servant de tube de remplissage (FRF) pour la masse de remplissage (FM) et qui commence dans la partie du dispositif de remplissage (FV), contenant la masse de remplissage (FM), et s'étend au moins jusqu'à l'extrudeuse (EX).

2. Dispositif suivant la revendication 1, caractérisé par le fait que le tube de guidage (FR) et le tube de remplissage (FRA) sont disposés concentriquement l'un par rapport à l'autre.

3. Dispositif suivant l'une des revendications précédentes, caractérisé par le fait que le tube de remplissage (FRF) se termine, suivant la direction de passage, en amont du tube de guidage (FRA).

4. Dispositif suivant l'une des revendications précédentes, caractérisé par le fait que le tube de guidage (FRA) et le tube de remplissage (FRF) se terminent au voisinage du cône allongé de la gaine (MA).

5. Dispositif suivant l'une des revendications précédentes, caractérisé par le fait que le tube de remplissage (FRF) est monté à la sortie du dispositif de remplissage (FE).

6. Dispositif suivant la revendication 5, caractérisé par le fait que le tube de remplissage (FRF) est maintenu, de façon à pouvoir être échangé, par une liaison à vis sur la sortie du dispositif de remplissage (FV).

7. Dispositif suivant l'une des revendications précédentes, caractérisé par le fait que le tube de guidage (FRA) est monté sur une filière d'introduction (EN) disposée à l'entre du dispositif de remplissage.

8. Dispositif suivant l'une des revendications précédentes, caractérisé par le fait qu'en amont du tube de guidage (FRA) se trouve prévu un réservoir (VB) pour une masse (BM) destinée à mouiller le conducteur (AD1 à ADn).

FIG 1

FIG 2